(19) **Europäisches Patentamt**

**European Patent Office**

**Office européen des brevets**

(11) **EP 1 294 206 B1**

(12) **EUROPEAN PATENT SPECIFICATION**

(45) Date of publication and mention
of the grant of the patent:
**08.03.2006 Bulletin 2006/10**

(51) Int Cl.:
*H04Q 7/32* (2006.01)

(21) Application number: **02396122.0**

(22) Date of filing: **19.08.2002**

(54) **A method for reducing power consumption of a mobile station and a mobile station**

Verfahren zur Reduzierung des Stromverbrauchs einer Mobilstation und eine Mobilstation

Procédé pour réduire la consommation d'énergie d'une station mobile et station mobile

(84) Designated Contracting States:
**AT BE BG CH CY CZ DE DK EE ES FI FR GB GR
IE IT LI LU MC NL PT SE SK TR**

(30) Priority: **18.09.2001 FI 20011832**

(43) Date of publication of application:
**19.03.2003 Bulletin 2003/12**

(73) Proprietor: **Nokia Corporation
00045 Espoo (FI)**

(72) Inventor: **Ruohonen, Jari
33710,
Tampere (FI)**

(74) Representative: **Pursiainen, Timo Pekka
Tampereen Patenttitoimisto Oy,
Hermiankatu 12B
33720 Tampere (FI)**

(56) References cited:
**EP-A- 0 782 277         EP-A- 1 005 242
WO-A-01/08439          AU-B- 727 966**

**Description**

The present invention relates to a method according to the preamble of the appended claim 1 for reducing power consumption of a mobile station. The invention further relates to a mobile station implementing the method in accordance with the preamble of the accompanying claim 11.

A wireless communication system usually refers to a communication system that enables wireless communication between a mobile station MS and the fixed parts of the system in question. Thus, communication is possible when the user of the mobile station MS is moving within the operation range of said system. One wireless communication system is the public land mobile network PLMN. At the time the present text was written, the majority of wireless communication systems were categorized to so-called second-generation mobile communication systems. As an example of such could be mentioned the widely known circuit switched GSM system (Global System for Mobile Telecommunications).

The present invention is applicable particularly for mobile communication systems that are under development and make use of so-called packet switched data transfer. In this specification as an example of such a mobile communication system is used the GPRS system (General Packet Radio Service) designed to base on the GSM system. In some contexts the GPRS system is referred also as a so-called 2.5-generation mobile communication system. It is obvious that the invention can be applied also in other systems utilizing packet switched data transfer, such as the third generation UMTS system (Universal Mobile Telecommunication System) that will be launched later in the future. Wireless systems utilizing packet switched data transfer will in the following be referred to as packet network.

Basic components of modern mobile communication systems based on a cellular network include a fixed base station subsystem BSS and different mobile stations MS (wireless communication devices), such as mobile phones utilizing it. The base station subsystem normally consists of several separate base stations BTS distributed over a geographical area, each base station serving a cell which consists of at least a part of this geographical area.

In the circuit switched GSM system communication between communication devices, such as a certain mobile station MS and a base station BTS serving it, one physical communication channel is allocated for communication for the entire time when said circuit switched connection is valid. In such cases the majority of connection time is used for transmitting various commands and only a small portion of the time is allocated for actual data transmission. It should be noted that the above-mentioned term 'physical communication channel' refers in this context, and also later, to a communication channel determined in accordance with the time division multiple access/frequency division multiple access (TDMA/FDMA) system according to the GSM system. The question is therefore not merely e.g. of a radio channel on a certain frequency.

The time division/frequency division multiple access system (TDMA/FDMA) according to the GSM system is used also in the GPRS packet network system in the radio path of the physical layer. However, the packet switched GPRS system makes communication more effective compared to the circuit switched GSM system in respect that the same physical communication channel according to the TDMA/FDMA system can be used by a plurality of different mobile station subscribers. Data is transmitted only when necessary, and a certain channel is not allocated to communication between only one mobile station MS and base station BTS. In the system a so-called virtual data transmission connection prevails between the mobile station and the GPRS system. The functional environment of the GPRS system is known as such and defined in depth e.g. in ETSI standards, wherein an exhaustive description of the system basics is not necessary in this context.

The functional environment of the GPRS system comprises at least one or multiple subnetwork service areas, which are connected to set up a GPRS backbone network. The subnetwork comprises multiple support nodes SN, such as serving GPRS support nodes SGSN.

Furthermore, the packet network comprises a packet control unit PCU connected to a mobile communication network (typically by means of a switching unit to a base station) in a manner that it can provide packet switching services to mobile stations via base stations BTS (cells).

The GPRS packet network provides packet switched information transmission between a support node SGSN and a mobile station MS. Different subnetworks are, in turn, connected through GPRS gateway support nodes GGSN to an external data network, such as the public switched data network PSDN. Thus, the GPRS service enables packet data transmission between a mobile station MS and an external network, wherein certain parts of the mobile communication network form an access network.

For using the GPRS services, the mobile station MS will first log in the network (GPRS attach). Log in forms a logic link between the mobile station MS and the support node SGSN of the GPRS frame network. The task of the base station subsystem BSS is to enable actual radio path communication between the mobile station MS and the support node SGSN.

Thus, the basic idea of the GPRS system is to apply packet switched resource allocation, wherein resources are allocated for use only when there is a need to transmit and receive data and information. In this case the use of resources can be optimized more efficiently than in the above-mentioned circuit switched GSM technique. The GPRS packet network is therefore designed to support applications that utilize discontinuous data transmission containing, intermittently, even large quantities of data. On the other hand, communication breaks occur in certain situations, wherein only a minimum amount of data related to network management etc. is transmitted between a certain mobile station MS and the support node of the network SGSN.

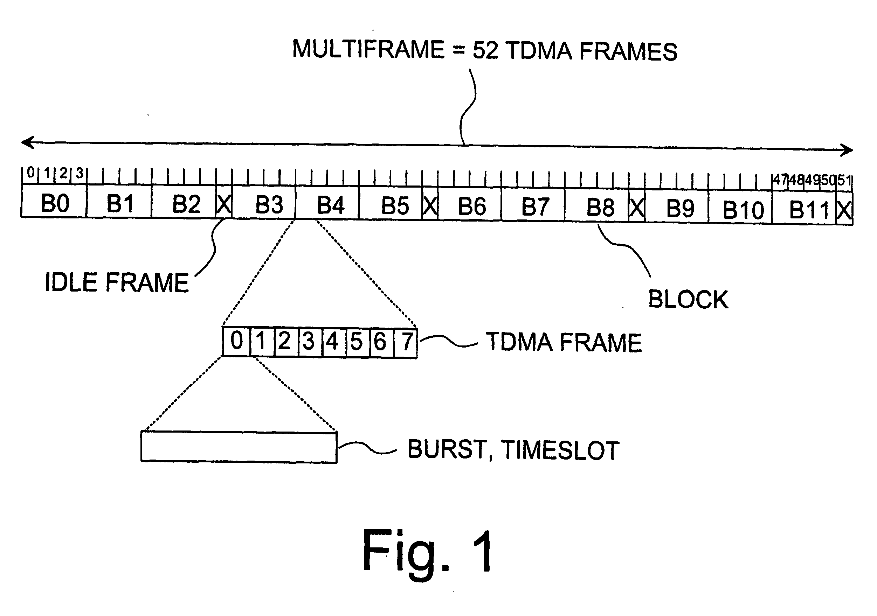

Fig. 1 shows in a principle view a multiframe structure (MULTIFRAME) according to the GPRS system.

The basic transmission unit, which is transmitted in the radio path in the physical layer of the GPRS system, and which enables the time division multiple access, is called a burst, which is composed of a certain number of bits. The length of a burst is 15/26 ms, i.e. about 0.577 ms. To enable frequency division multiple access the radio path is divided into radio channels. The difference between the medium frequencies of the radio channels is in the GPRS/GSM system 200 kHz.

Eight bursts that are sent in eight timeslots (TIMESLOT) allocated for them constitute one so-called TDMA frame. In accordance with Fig. 1, a broader 52 multiframe (MULTIFRAME) comprising thus 52 TDMA frames is further formed of these frames. Bursts, i.e., time slots comprising one TDMA frame are called physical channels.

In the GPRS system the allocation of these physical channels is flexible, and for each mobile station MS 1 to 8 bursts, i.e. timeslots, can be allocated on a certain radio channel within one TDMA frame. If necessary, timeslots can thus be divided for a plurality of active mobile stations, i.e. a maximum of eight different mobile stations can communicate on a single radio frequency. Uplink communication (communication from the mobile station to the base station) and downlink communication (communication from the base station to the mobile station) can be separately allocated to different users.

By using timeslots included in the TDMA frames the above-mentioned physical channels are formed in the GPRS system further into so-called logical channels for different transmission purposes for signalling and data packets. The logical channels are mainly used either as control channels CCH or as traffic channels TCH. The traffic channels TCH are primarily used for transmission of speech and data, and the control channels CCH are used for signalling between the base station BTS and the mobile station MS. The tasks of the different channels are defined in more detail in 3GPP (3rd Generation Partnership Project) specifications related to packet networks and published e.g. by ETSI organisation (European Telecommunication Standards Institute).

In this context, reference of such logical channels is made to PCCCH (Packet Common Control Channel), PBCCH (Packet Broadcast Control Channel), PDTCH (Packet Data Traffic Channel), PACCH (Packet Associated Control Channel) and PTCCH (Packet Timing Advance Channel). The PCCCH channel is used e.g. during a packet connection for making a request to the base station for transmission timeslots to be used for transmission of packets, for informing the mobile station of the allocated timeslots, for the transmission of search messages, etc. In the PBCCH channel the base station transmits system information of the packet system to the mobile station. The actual transmission of the data packets that are to be transferred is carried out in the PDTCH channel. The PACCH channel is used for transferring signalling data related to packet transmission (acknowledgements, measuring data and reports). The PTCCH channel is used for timing purposes, for estimating various delays.

The above-mentioned logical channels, e.g. the packet data traffic channel PDTCH, are collected to a multiframe structure illustrated in Fig. 1 and comprising thus the repetitively transmitted 52 TDMA frames, which are further divided into 12 successive radio blocks (BLOCK), each of which comprises four frames (TDMA FRAME), and into four extra frames (IDLE FRAME). The radio blocks are indicated as blocks B0 to B11. In Fig. 1, the idle frames are also indicated with the reference X. In the downlink communication these can be used for signalling.

In accordance with the multislot configuration used at the time, 1 to 8 timeslots (bursts) are allocated for one mobile station MS in one TDMA frame. Four TDMA frames received consecutively always forms one so-called block period. In case only one timeslot has been allocated for the mobile station MS in one TDMA frame, this means that the mobile station has received one block with 4 bursts during one block period. If, in accordance with the multislot configuration used, e.g. 3 timeslots are allocated in one TDMA frame for the mobile station MS, this means that correspondingly the mobile station has received 3 blocks with altogether 12 bursts during one block period.

The blocks B0 to 11 are further divided into parts, for example headers and control blocks comprising for example a TFI identifier (Temporary Flow Identifier). To enable multiple access in downlink communication, the TFI identifier is used in the data header to indicate the blocks that are addressed to a specific, selected mobile station MS. According to the GPRS system, all the mobile stations MS, waiting for data to be transmitted to them on a channel jointly allocated for them, receive all the blocks, interpret the received information and the TFI identifier, and select the blocks addressed to them. In the GPRS system, the mobile stations must be continuously ready for packet data communication (Temporary Block Flow, TBF), wherein they must quickly shift from a so-called idle mode to a so-called packet transfer mode.

When the mobile station MS is synchronized with a transmission of a cell in a packet network, e.g. when the mobile station is switched on or it moves to another cell, the base station BTS transmits information e.g. as to how the above-mentioned logical channels in the area of the cell in question are arranged to physical channels, i.e. in which radio block of the multiframe and in which timeslot information of each logical channel is being transmitted.

In the GPRS system the mobile station MS can have e.g. the following three different connection modes relative to the GPRS network: idle mode, standby mode and ready mode.

In idle mode the mobile station is not connected to the mobility management of the network and communication is not possible. The mobility management data of the mobile station and the support node SGSN of the network is not necessarily up-to-date in view of the mobile station in question if the mobile station has moved to the area of another cell when in idle mode. If necessary, the mobile station MS performs selection and reselection of cell. A mobile station MS in the idle mode is not connected to the network.

In the ready mode the mobile station MS is connected to the mobility management of the GPRS network. The network is aware of the location of the mobile station at a precision of cell and the mobile station can both transmit and receive data packets. The cell of the network is selected and reselected either by the mobile station MS or the GPRS network, which can control the selection of the cell.

In the standby mode the mobile station is connected to the mobility management of the GPRS network, but the mobile station cannot transmit or receive data packets. The position of the mobile station is known in the network only at a precision of the routing area. Reception of paging requests from the support node SGSN is allowed for cell selection services. Changing from the ready mode to the standby mode can be carried out e.g. when sufficient time has passed from the transmission of the last data packet between the mobile station and the packet network.

Since packet switching has the effect in the GPRS system that the amount of data transmitted between the base stations BTS and the mobile station MS varies to a significant degree in time, functions have been determined in the system by which, when the amount of data to be transferred is small, e.g. power saving can be brought about and interference caused to neighbouring channels by loaded radio frequencies can be diminished. These functions of prior art implemented both in the mobile station MS and in the base station BTS are described briefly in the following.

In the standby mode the mobile station MS can by using a so-called discontinuous reception mode DRX set itself to the power-saving mode for a certain period of time. The mobile station MS receives paging messages from the base station BTS it is listening at the time. Based on these paging messages the mobile station MS can detect whether any messages are coming to it. The time between two successive paging messages is called a DRX period. In the following, this DRX period is called a paging period.

During the paging period the mobile station MS can set itself to the power-saving mode for a certain period of time because it is not excepting any messages from the mobile communication network. Such a discontinuous reception mode (DRX mode) is allowed to a mobile station in the standby mode at every other time except when the mobile station performs cell selection functions. The length of the period can vary and the mobile station MS receives from the base station BTS parameter data, based on which the mobile station can calculate when the next paging message is to be expected. Because the mobile station is synchronized with the transmission of the base station BTS, the mobile station knows when the following paging message will be transmitted. Such a discontinuous reception mode makes it possible to switch off all the possible functional blocks related to the radio interface, whenever these are not necessary. Such functional blocks include e.g. a radio part, a baseband part comprising preferably e.g. a digital signal processing unit, and a system oscillator used in radio interface functions. This arrangement aims at reducing the overall power consumption of the mobile station.

The base station BTS can in certain situations, e.g. during breaks in data flow, in order to lower the load to the radio channel used, use the PDTCH channel (Packet Data Traffic Channel) for downlink data transmission by using a so-called discontinuous transmission mode DTX. Thus, only a part of the blocks sent in the TDMA multiframe and allocated to the PDTCH channel contains data while the other blocks contain noise. A minimum requirement determined by the GPRS specification is that the base station subsystem BSS transmits as downlink DTX transmissions data from the support node SGSN of the network to the mobile station MS at least once every 18th block period, or more often. These blocks are referred to as reference blocks, which are intended to keep the mobile station synchronized to the base station in view of the automatic power control, frequency control and timing control. In certain situations on the PDTCH channel it is possible that 17 block periods of a certain period containing a total of 18 block periods contain only background noise, which the mobile station MS attempts to receive in vain.

One example of related art is disclosed in EP 1005242, wherein the activity of the mobile telephone is segmented even during standby periods and allowing the activation only to occur if the reception quality of signalling surrounding the standby condition is sufficient. When the mobile telephone is on standby, given the redundancy of the activation signalling, only some or the signals are listened to in order to decide whether it is necessary to listen to the others and to activate the mobile telephone. When the mobile telephone is communicating and the other party is silent, the energy consumed in receiving and above all in decoding the received signals is reduced by eliminating demodulated signals of too poor quality.

The purpose of the present invention is to introduce a new method that enables more advanced power saving in the mobile station MS compared to the solutions of prior art. The purpose of the invention is also to introduce a mobile station MS applying the method.

The method according to the invention is primarily characterized in what will be presented in the characterizing part of the appended claim 1. The mobile station according to the invention is in turn primarily characterized in what will be presented in the characterizing part of the appended claim 11. Advantageous embodiments of the invention are presented in the appended dependent claims.

The invention is based on the idea that in a situation in which the base station BTS of the packet network uses discontinuous transmission mode DTX in the PDTCH channel for downlink communication, the mobile station MS can lower its power consumption by listening, i.e., by receiving in full block-period length only those radio blocks that really contain data transmitted by the base station BTS. Depending on the multislot configuration used one or a plurality of PDTCH blocks can be transmitted during one block period.

In accordance with the invention, the mobile station MS observes the properties of one or multiple bursts included in the initial part of each PDTCH block period, e.g. the 1 to 3 first bursts in order in the block period, and on the basis of this determines whether the block period in question contains a downlink transmission of the BTS or only noise. If it is detected that the first bursts of the block period in question contain only noise, the mobile station MS can omit receiving the remaining bursts and/or blocks contained in said block period. This means that the mobile station MS can during the end part of said block period omit functions related to reception and e.g. channel decoding, wherein the power consumption of the digital signal processor DSP and the radio part (e.g. an Rx amplifier) of the mobile station is temporally lowered to a significant degree.

Preferably the decision as to whether a separate PDTCH block period will be actively received in full or whether the non-active power-saving mode will be applied for the rest of the period is carried out by following the signal strength of the PDTCH block period during its first bursts. On the basis of this observation, an averaged received signal level, a so-called Rx level, which in the following will be marked as RXLEV, will be determined for said block period in view of its first few bursts. In case said averaged Rx level RXLEV of the first bursts of the block period goes under a certain predetermined threshold value and under a constantly updating, averaged Rx level PDTCH_RXLEV of blocks accepted for reception with a certain predefined margin, then the mobile station MS is set to the power-saving mode for the rest of the block period.

One embodiment of the invention for interpreting whether a certain block period contains a downlink transmission or noise, utilizes, in addition to a comparison between the RXLEV and PDTCH_RXLEV levels, a signal noise ratio SNR determined for the first bursts in the block period in question.

In a second embodiment of the invention the reliability of the method is improved by utilizing interference measurements performed by the mobile station MS and indicating the level of background noise. When the level of background noise is known, power saving in the mobile station MS can be activated by a lower Rx level RXLEV margin relative to the PTDCH_RXLEV level, if it is noted that the Rx level RXLEV measured for the first bursts of the examined block period corresponds substantially to the background noise level determined in the interference measurements.

The most significant advantage of the present invention is that it can be utilized for lowering power consumption in a mobile station MS operating in a packet data network. Further, this enables in a mobile station MS operational periods that are longer than before without the need to increase the capacity of batteries or the like. The invention is significant particularly for the reason that at present the power consumption of mobile stations in the GPRS system or other packet networks is relatively high due to the functional principles of the system, because the mobile station MS has to listen to transmissions of the packet network much more uninterruptedly than e.g. the mobile stations of the GSM system.

An additional benefit of the invention is that the invention is very easy to implement in practise by means of changes made in the software of the digital signal processing unit DSP in the receiver of the mobile station MS. The functions for lowering power consumption that are required in the invention are mainly already present in the mobile stations and they are utilized e.g. when switching the mobile station MS, in accordance with the teachings of the prior art, to the power-saving mode for time periods that last one search period while the mobile station operates in a discontinuous reception mode DRX.

The power saving obtained in the mobile station MS by means of the invention is much dependent on the operating method and loading of the GPRS network. In general, power saving reaches its peak when the traffic in the network is intermittent, or when small amounts of data are transferred at a time, which is the case e.g. in a WAP connection.

In the following, the invention will be described in more detail with reference made to the appended drawings, in which

Fig. 1    shows a multiframe structure of prior art, particularly the frame structure of the GPRS system, and

Fig. 2    shows, in a reduced block chart, a receiver, which can be applied in connection with the mobile station according to the invention.

The frame structure of Fig. 1 used in the GPRS packet network has been partly described earlier when the prior art was discussed.

The logical packet data traffic channel PDTCH to which the present invention particularly relates to is compiled to a multiframe structure (MULTIFRAME) illustrated in Fig. 1 and thus comprising repeatedly transmitted 52 TDMA frames (TDMA FRAME), which are further divided into 12 successive blocks (BLOCK). One block according to the GSM/GPRS system comprises, in accordance with what has been described earlier, 4 TDMA frames with eight timeslots each. Four TDMA frames received consecutively always form one block period. In accordance with the requirements and the multislot configuration used, it is possible to allocate one to eight timeslots of one TDMA frame to be used by one mobile station MS. Thus, the amount of timeslots, i.e. bursts, received during one block period can vary between 4 to 32 pieces.

If a plurality of timeslots (bursts) in one TDMA frame have been allocated for the mobile station MS then the mobile station receives always during one block period (4 TDMA frames) a number of blocks corresponding to the multislot configuration in question. This means that if, in accordance with the multislot configuration used, 3 timeslots are allocated in one TDMA frame for the mobile station MS, then after having received four successive TDMA frames the mobile station MS has received 3 blocks during the block period in question.

When the amount of data to be transferred is small, the base station BTS uses in the PDTCH channel for downlink data transmission discontinuous transmission mode DTX. Thus, only a part of the block periods of the PDTCH channel transmitted in the TDMA multiframe contains data while the other blocks contain noise. A minimum requirement determined by the GPRS specifications defines that the base station BTS transmits reference blocks in downlink DTX transmissions at least one in every 18th block period, or more often, in order to keep the mobile station MS synchronized with the network. This requirement becomes evident e.g. from Chapter 10.2.2 of the 3rd Generation Partnership Project group specification 3GPP TS 05.08, version V8.9.0. In a certain situation it is possible in the PDTCH channel that 17 block periods of a certain period containing a total of 18 block periods contain only background noise, which the mobile stations MS attempts to receive. In practise the base station BTS can use discontinuous transmission mode DTX always when the base station has nothing to transmit, but the base station still wants to keep the mobile station MS synchronized with its operation, and therefore ready for reception.

In accordance with the invention, the mobile station MS observes the properties of one or multiple bursts included in the initial part of each PDTCH block period, e.g. the 1 to 3 first bursts (timeslots) in the block period, and on the basis of this decides whether the block period in question contains a downlink transmission of the BTS or only noise. The above-mentioned observation takes place by measuring the power of the PDTCH block period signal transmitted by the mobile station MS during its first bursts. In accordance with the invention the average received signal level, i.e. Rx level, is determined for the first bursts of each block period.

In the following, different embodiments of the invention will be exemplified. First, the concepts RXLEV and PDTCH_RXLEV are defined, these being utilized when detecting whether a certain block period contains only noise or a downlink transmission.

The bursts of the PDTCH block period to be examined are marked in a manner that the first burst of the block period is marked with b1, the second burst with b2, and the third burst with b3, and so forth. In accordance with the invention, for the first few bursts of each PTDCH block period, for example for the bursts b1 to b3, there is defined the Rx signal level, or to be precise, the power level of the bursts which is illustrated e.g. by the parameter P(n), in which n is the symbol identifying a certain burst. Thus, the parameter P(b1) describes the Rx power level of the burst b1 indicated in dBm units. In order to determine the Rx power level of a certain burst one or a plurality of samples taken from the burst in question can be used.

The averaged Rx power level, determined for the first or the first few bursts is marked RXLEV, wherein in accordance with an embodiment of the invention when the three first bursts of the block period are measured, the RXLEV is calculated according to the principle (1):

$$(1) \qquad RXLEV = (\; P(b1) + P(b2) + P(b3)\;)\,/\,3$$

In a corresponding manner, PDTCH_RXLEV refers to the Rx power level informed in dBm units and calculated e.g. as a running average or by some other manner by averaging the power levels of those PTDCH block periods containing an actual downlink transmission, which the base station BTS has transmitted at an output power level accepted for the connection between the base station and the mobile station MS. It is known as such that this acceptable output level can vary in the GSM/GPRS system in different conditions, e.g. when the distance between the base station BTS and the mobile station MS changes. The PDTCH_RXEV therefore refers to the Rx power level of a real signal arriving at the reception when the PDTCH blocks are being received.

Depending on the output power control mode used by the base station BTS at the time, the PDTCH_RXLEV must be determined in a manner applicable for each output power control mode in order to obtain the correct result. These different manners according to the invention will be described in the following. In this context reference is also made to the specification 3GPP 05.08 version 8.9.0, Chapter 10.2.2 describing in more detail the output power control mode of the base station BTS substantial for the invention, as well as the different modes used therein.

Two different control modes are used for the output power control of the base station BTS in accordance with the above-mentioned specification: power control mode A and power control mode B. The control mode used is indicated in the parameter BTS_PWR_CTRL_MODE. Moreover, two different power management modes are related to both above-mentioned control modes: Power management mode PR A and power management mode PR B. The management mode used is indicated in the parameter PR_MODE.

The following description relates to the PDTCH_RXLEV while the base station BTS is acting in different output power control modes described in the specification 3GPP 05.08 version 8.9.0 in Chapter 10.2.2.

*Output power control not in use*

In a situation in which the base station BTS is not using the output power control, i.e. all the PDTCH blocks are transmitted with the same power level, all the blocks that have been correctly received at the mobile station MS end can be used for calculating the PDTCH_RXLEV.

*Power control mode A, PR mode A*

When the base station operates in the A mode of the output power control and the power management mode being PR A, all the blocks that have been received correctly at the mobile station MS, which blocks are also addressed to the mobile station MS in question by a TFI symbol, can be used for calculating the PDTCH_RXLEV.

The precision of measurement can be further improved by utilizing a PR field transmitted in the RLC/MAC header of the PDTCH block and indicating the output power of the base station BTS used in the transmission of the block in question. That means that a Rx power level measured for a certain block can be compared to the Tx power level indicated in the PR field of the block in question, and if the ratio between Rx power level given for the block in question and the said Tx power level differs to a significant degree from the corresponding ratio determined for other blocks used in the PDTCH_RXLEV calculation, the difference can either be compensated to the result of the measurement or the block in question can be left out of the calculation. That is, a different Rx/Tx ratio indicates either a momentary attenuation in the transmission path and/or a measurement error of the Rx power level in the mobile station MS.

*Power control mode A, PR mode B*

When the base station operates in the A mode of the output power control and when the power management is PR B, all the blocks that have been correctly received at the mobile station MS can be used for the PDTCH_RXLEV calculation. The precision of the calculation can be improved by using the power information given in the PR field.

*Power control mode B, PR mode A*

When the base station operates in the B mode of the output power control and the power management mode is PR A, all the blocks that have been received correctly at the mobile station MS, which blocks are also addressed to the mobile station MS in question by a TFI symbol, can be used for calculating the PDTCH_RXLEV.

*Power control mode B, PR mode B*

When the base station operates in the B mode of the output power control and the power management mode is PR B, all the blocks that have been received correctly at the mobile station MS, which blocks are also addressed to the mobile station MS in question by a TFI symbol, can be used for calculating the PDTCH_RXLEV. It is possible to use in the calculation also the information about power given in the PR field and thereby utilize also those blocks that have not been addressed to the mobile station MS in question.

When the mobile station MS has defined a RXLEV value for the block period that is observed, this value is now compared to the PDTCH_RXLEV value determined according to the above described options and updated constantly in order to interpret whether the block period in question contains noise or a downlink transmission regarded for the mobile station MS.

This comparison can be preferably carried out e.g. in a manner that if the RXLEV goes under a certain predefined threshold value Y dBm, and if also the difference between the Rx level PDTCH_RXLEV defined to the blocks accepted for reception is downwards larger than a certain difference value Z dBm, then the mobile station MS interprets that the block period contains mere noise and is thus set to the power-saving mode for the rest of the block period in question.

In order to diminish erroneous interpretations it is advantageous to determine the above-mentioned difference value Z, i.e. the marginal with relation to the Rx level PDTCH_RXLEV, relative to said PDTCH_RXLEV value. Thus, in a situation in which a signal that arrives to reception has on the average a high Rx power level, it is possible to let the difference value Z grow without increasing the probability of erroneous interpretations to a significant degree. In a corresponding manner, at low received Rx levels the difference value Z is lower, i.e. the marginal at which the block in question is interpreted as noise is, in a corresponding manner, also lower.

The difference value Z can be defined as a relative value with relation to the Rx level PDTCH_RXLEV e.g. using the following formula (2):

$$(2) \qquad Z = A + (Y + PDTCH\_RXLEV) / B$$

In a situation in which PDTCH_RXLEV is given e.g. the value -80 dBm, and it is selected that A = 8, Y = 110 and B = 2, the difference value Z will consequently be 23 dBm. It is obvious that the above-mentioned numerical values are given only to illustrate the topic, and they are thus in no respect intended to limit the different embodiments of the invention.

The reliability of the method according to the invention can be improved further in certain situations in a manner that in addition to the Rx level RXLEV arriving at the reception, also the signal noise ratio SNR is determined for the first bursts measured from the block period that is under observation. This means that if the signal noise ratio SNR of the bursts is lower than a certain predefined threshold value R, it can be deduced that no downlink transmission is taking place, even if the Rx level RXLEV were sufficient as such for the block to be interpreted as a downlink transmission. In a corresponding manner, if the signal noise ratio SNR is higher than said predefined threshold value R, it is possible, merely on the basis of this, to deduce that the transmission contains a downlink transmission even if a comparison based only on the Rx level RXLEV did not demonstrate this.

It is also possible to apply more than one predefined threshold values for the signal noise ratio SNR. For example, if the signal noise ratio SNR of the first few bursts is lower than a lower SNR threshold limit $R_{low}$, then it may be determined that there is no transmission for sure. However, if the signal noise ratio SNR is higher than said lower limit $R_{low}$, but still lower than a predefined higher SNR threshold limit $R_{high}$, then Rx level RXLEV is used to decide whether a downlink transmission exists or not. If the signal noise ratio SNR exceeds said higher limit $R_{high}$, this alone may be used as a direct indication that the transmission contains a downlink transmission.

By carrying out comparison of the Rx level RXLEV, as well as the signal noise ratio SNR, it is possible to make the activation of the power saving in the mobile station MS more sensitive in some situations, and at the same time to decrease the possibility that the mobile station MS is set to the power saving mode on erroneous grounds.

Comparison between the signal noise ration SNR and a certain predefined threshold value R is also the only way to enable power saving in a situation, in which the PDTCH channel is positioned on the same frequency with the BCCH channel (Broadcast Control Channel) and frequency hopping is not in use. Thus, the base station cannot cut the transmission power in a downlink DTX transmission situation, because the BCCH frequency should have default transmission power. However, in some base station implementations, instead of cutting the transmission power, a TSC (Training Sequence Code) can be inverted in the bursts, wherein in an implementation in which the mobile station MS uses the TSC for calculating the signal noise ratio SNR very low values for the signal noise ratio SNR are obtained as result.

In practise, comparison of the signal noise ratio SNR is carried out in a manner that the level of the average signal noise ratio SNR of the first few bursts, e.g. the 1 to 3 first bursts is compared to a preset SNR threshold value R and if the average signal noise ratio of the bursts goes under said threshold value R, the block period in question is interpreted as noise.

The reliability of the method of the invention can be further improved in a manner that if the continuously updated PDTCH_RXLEV value of the Rx power level goes below a certain power level, i.e. the reception takes place in a poor field, for example when the mobile station MS is positioned on the border of the base station (BTS) range, the mobile station cannot be set to the power-saving mode. In a poor field the possibility of erroneous interpretations increases because the RXLEV and PDTCH_RXLEV values are getting closer to each other.

The reliability of the method of the invention can be still improved by utilizing further interference measurements carried out by the mobile station MS and determined in 3GPP TS 05.08 version V8.9.0, Chapter 10.2.3.2. The result of the interference measurement carried out on the PDTCH channel indicates that the level of the background noise detected by the mobile station MS (if PDTCH is on a different frequency than BCCH). Based on this information it is possible to activate power saving in the mobile station MS at a smaller Rx power level RXLEV margin (difference value Z) if it is noted that the Rx level RXLEV measured for the first bursts of the block period observed substantially corresponds to the level of background noise determined by the interference measurements. This enables a reliable activation of the power saving more often that would be possible by merely comparing the RXLEV and PDTCH_RXLEV values. In practise the results of the interference measurements are not always available at the beginning of PDTCH, wherein in these cases it is possible to first use a higher difference value Z in the comparison between the RXLEV and PDTCH_RXLEV values and, at the point when the results of the interference measurements are ready, to change the decision in a manner described earlier.

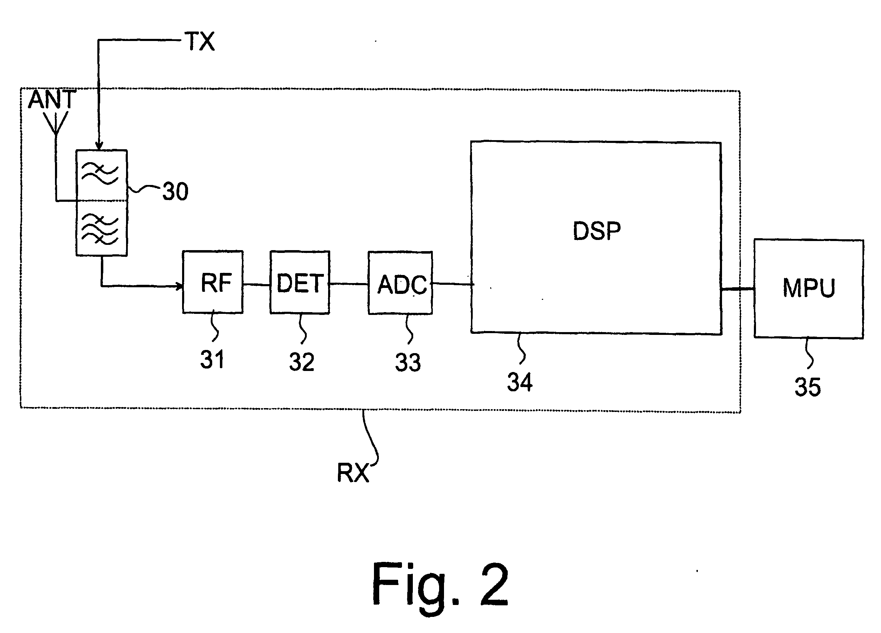

Fig. 2 further shows as a deduced block chart one receiver RX, which can be used in the mobile station MS when applying the method of the invention. In the receiver RX signals are received by an antenna ANT and directed via an antenna coupler 30 to a pre-stage 31 of the receiver, in which pre-stage the received signal is e.g. band-pass filtered and converted, either as a direct conversion or through one or multiple intermediate frequencies to a baseband signal. This conversion is carried out in a manner known as such by mixing one or multiple local oscillatory frequencies to the received signal. From the pre-stage 31 of the receiver the received signal is directed to be detected by a detector 32. The detector 32 forms an analog signal, which is converted to a digital signal in an analog-digital converter 33 (ADC). Subsequently, the signal in digital form is directed to the digital signal processing unit DSP, which is illustrated by reference number 34 in Fig. 3.

In the digital signal processing unit DSP the power of the received signal is calculated from the detected signal formed by the detector 32. To measure the signal noise ratio, in addition to the power of the received Rx signal, preferably also the power of the noise and other interference signals is measured, wherein the signal noise ratio SNR is obtained as the ratio of these measuring values. Measuring of the noise power can be carried out e.g. in an idle period, preferably in the idle period preceding the reception period. The processor MPU of a wireless communication device, which has been marked with the reference number 35 in the figure, can utilize the method of the invention and thus inform the digital signal processing unit DSP that the received signal is not a useful signal, but an interference signal.

In a practical prior art situation when GPRS data is being transferred, i.e. when the mobile station MS is on the PDTCH channel, there is nothing to indicate whether the signal is a useful signal or an interference signal. In this case the digital signal processing unit attempts to decode data from every block. If the decoding is successful, it is known that the signal is a useful signal. However, if the decoding fails, it is not possible to say whether this was due to poor reception conditions or whether the block did not send any transmission at all. To put it reversely, the method according to the invention enables detection of a useful signal, wherein the reception and other operations of the mobile station are not kept active unnecessarily.

It is obvious that said Rx power level and the signal noise ratio SNR of the received signal can be defined also using other methods than the ones presented here.

The above-described operations can, to a great extent, be implemented in an application software of the digital signal processing unit DSP.

The invention has been illustrated above by means of the packet transfer service GPRS implemented in the GSM system, but the invention has not been limited to this system only. The invention can also be implemented e.g. in the UMTS system that is under development as well as in other 3G mobile communication systems.

It is naturally obvious that even if the examination according to the invention is preferably carried out in particular for the first burst or for a first few sequential bursts of the block period, it is not necessary to perform the examination always for the first burst b1, or for bursts that are immediately successive relative each other. In other words, the control can be performed e.g. only for the first burst b1, or only for the second burst b2, or e.g. for the bursts b2 and b4 or for the bursts b1 to b5. What is substantial in view of the invention is that the examination is carried out for one or multiple bursts positioned at the initial part of the block period in question, wherein the decision of activating the power saving for the rest of the block period can be made well before the block period in question ends. Depending on the multislot configuration used the number of blocks received during a block period is variable, wherein when a different number of blocks (and bursts) is received, also the time available for making decisions on activating power saving varies, in a manner that in practise actual benefit can be achieved with power saving.

It is also obvious for any person skilled in the art, that even if the method according to the invention indicates that the mobile station may be set immediately to a power-saving mode, if necessary, the activation of the sleep functionalities may be delayed in order to perform, for example, RSSI (Received Signal Strength Indicator) measurements or any other tasks required by the wireless communication system.Thus, the present invention is not limited solely to the above-presented embodiments, but it can be modified within the scope of the appended claims.

**Claims**

1. A method for reducing power consumption in a mobile station operating in a packet radio network, in which information is transmitted through a base station to the mobile station in data frame format on a logical packet data traffic channel, wherein the base station uses in order to reduce the loading of the radio channel, discontinuous transmission mode in said packet traffic channel for downlink data transmission, wherein the properties of at least one burst positioned in the initial part of each block period of the packet traffic channel is observed in the mobile station, and upon detecting that said burst/bursts contain noise instead of a downlink transmission, the mobile station is set to a power-saving mode for the rest of the block period in question, and when the signal level of blocks accepted for reception which in the following will be marked as PDTCH_RXLEV goes below a certain predefined threshold limit, the mobile station is prevented from switching to the power saving mode.

2.  The method as set forth in claim 1, **characterized in that** the properties of the 1 to 3 first bursts b1, b2, b3 of the block period are observed.

3.  The method as set forth in claim 1 or 2, **characterized in that** the averaged received signal level of said burst/ bursts positioned in the initial part of the block period which in the following will be marked as RXLEV is controlled, and for this signal level RXLEV a minimum threshold value Y is set, burst/bursts below said minimum value Y being interpreted as noise.

4.  The method as set forth in claim 3, **characterized in that** said signal level RXLEV is further compared with the updated, averaged received signal level PDTCH_RXLEV defined for blocks which have been accepted for reception, in a manner that a largest allowed difference value Z is defined for RXLEV downwards relative to said PDTCH_RXLEV, wherein when the signal level RXLEV differs from the signal level PDTCH_RXLEV more than the amount of said difference value Z, said burst/bursts are interpreted as noise.

5.  The method as set forth in claim 4, **characterized in that** said signal level PDTCH_RXLEV is determined in the packet radio network in the manner applicable with the base station power control mode implemented at the time.

6.  The method as set forth in the preceding claims 4 or 5, **characterized in that** said difference value Z is determined as a relative value in view of the signal level PDTCH_RXLEV.

7.  The method as set forth in any of the preceding claims 3 to 6, **characterized in that** said signal level RXLEV is compared to the level of background noise obtained from the interference measurements carried out by the mobile station, wherein when the signal level RXLEV corresponds substantially to the level of said background noise, said burst/bursts are interpreted as noise.

8.  The method as set forth in any of the preceding claims, **characterized in that** the averaged signal noise ratio SNR of burst/bursts positioned in the initial part of the block period is observed, and a minimum value is set for this signal noise ratio SNR, burst/bursts below said minimum value being interpreted as noise.

9.  The method as set forth in any of the preceding claims, **characterized in that** the packet radio network is the GPRS network and said packet traffic channel is the PDTCH channel of the GPRS network.

10. The method as set forth in any of the preceding claims 1 to 8, **characterized in that** the packet radio network is a UMTS network.

11. A mobile station arranged to operate in a packet radio network, in which packet radio network information is transmitted through a base station to the mobile station in data frame format on a logical packet traffic channel, wherein the base station uses, in order to reduce the loading of the radio channel, in said packet traffic channel discontinuous transmission mode for downlink data transmission, wherein the mobile station comprises means (34) for observing the properties of at least one burst b1 positioned in the initial part of each block period of the packet data traffic channel, and means (34) for setting the mobile station to a power-saving mode for the rest of the block period in question when detecting that said burst/bursts contain noise instead of a downlink transmission, the mobile station is arranged not to switch on to the power-saving mode when the signal level of blocks accepted for reception which in the following will be marked as PDTCH_RXLEV, goes under a certain predefined threshold value.

12. The mobile station as set forth in claim 11, **characterized in that** the mobile station comprises means (34) for observing the properties of the first 1 to 3 burst/bursts b1, b2, b3 of the block period.

13. The mobile station as set forth in claim 11 or 12, **characterized in that** the mobile station comprises means (34) for observing the averaged received signal level of said burst/bursts positioned in the initial part of the block period which in the following will be marked as RXLEV, a minimum threshold value Y being set for said signal level RXLEV, the mobile station interpreting the burst/bursts below said minimum value Y as noise.

14. The mobile station as set forth in claim 13, **characterized in that** the mobile station further comprises means (34) for comparing said signal level RXLEV with an updated, averaged received signal level PDTCH_RXLEV defined for blocks which have been accepted for reception, in a manner that a largest allowed difference value Z is defined for RXLEV downwards relative to said PDTCH_RXLEV, wherein when the signal level RXLEV differs from the signal level PDTCH_RXLEV more than the amount of said difference value Z, the mobile station interprets said burst/bursts as noise.

15. The mobile station as set forth in claim 14, **characterized in that** the mobile station comprises means (34) for defining said signal level PDTCH_RXLEV in the packet network in a manner applicable with the base station power control mode implemented at the time.

16. The mobile station as set forth in the preceding claims 14 or 15, **characterized in that** the mobile station comprises means (34) for defining said difference value Z as a relative value in view of the signal level PDTCH_RXLEV.

17. The mobile station as set forth in any of the preceding claims 13 to 16, **characterized in that** the mobile station comprises means (34) for comparing said signal level RXLEV to the level of the background noise obtained from the interference measurements carried out by the mobile station, wherein when the signal level RXLEV corresponds substantially to the level of said background noise, said burst/bursts are interpreted as noise.

18. The mobile station as set forth in any of the preceding claims 11 to 17, **characterized in that** the mobile station comprises means (34) for observing the averaged signal noise ratio SNR of a burst/bursts positioned in the initial part of the block period, a minimum threshold value being set for said signal noise ratio SNR, the mobile station interpreting the burst/bursts below said minimum value as noise.

19. The mobile station as set forth in any of the preceding claims 11 to 18, **characterized in that** the mobile station is arranged to operate in a GPRS network.

20. The mobile station as set forth in claim 11 to 19, **characterized in that** the mobile station is arranged to operate in a UMTS network.

## Patentansprüche

1. Verfahren zur Reduzierung des Energieverbrauchs einer Mobilstation, die in einem Paketfunknetz betrieben ist und auf der Information in Datenfeldformat auf einem logischen Paketdatenverkehrskanal über eine Basisstation an die Mobilstation übertragen wird, wobei die Basisstation zur Reduzierung der Belastung des Funkkanals den Discontinuous-Transmission-Modus auf dem Paketverkehrskanal zur Downlink-Datenübertragung benutzt, wobei die Eigenschaften von zumindest einem Burst, der im Anfangsteil jeder Blockperiode des Paketverkehrskanals positioniert ist, in der Mobilstation überwacht werden und auf das Erkennen hin, daß der/die Burst/Bursts Rauschen anstelle einer Downlink-Übertragung enthält/enthalten, die Mobilstation für den Rest der betreffenden Blockperiode auf einen Energiesparmodus eingestellt wird, und wenn der Signalpegel von Blöcken, die zur Annahme akzeptiert werden, im folgenden als PDTCH_RXLEV markiert, unter einen bestimmten, vorgegebenen Schwellenwert fällt, verhindert wird, daß die Mobilstation in den Energiesparmodus umschaltet.

2. Verfahren nach Anspruch 1, **dadurch gekennzeichnet, daß** die Eigenschaften der 1 bis 3 ersten Bursts b1, b2, b3 der Blockperiode überwacht werden.

3. Verfahren nach einem der Ansprüche 1 oder 2, **dadurch gekennzeichnet, daß** der gemittelte, empfangene Signalpegel des/der Bursts, der/die im Anfangsteil der Blockperiode positioniert ist/sind, im folgenden als RXLEV markiert, gesteuert wird und für diesen Signalpegel RXLEV ein Mindestschwellenwert Y eingestellt wird, wobei ein Burst/Bursts unter dem Mindestwert Y als Rauschen ausgelegt werden.

4. Verfahren nach Anspruch 3, **dadurch gekennzeichnet, daß** der Signalpegel RXLEV ferner mit dem aktualisierten, gemittelten, empfangenen Signalpegel PDTCH_RXLEV, der für Blöcke definiert wird, die zum Empfang akzeptiert wurden, verglichen wird, so daß ein größter gestatteter Differenzwert Z für RXLEV nach unten bezüglich des PDTCH_RXLEV definiert wird, wobei der/die Burst/Bursts als Rauschen ausgelegt wird/werden, wenn der Signalpegel RXLEV um mehr als den Betrag des Differenzwerts Z von dem Signalpegel PDTCH_RXLEV abweicht.

5. Verfahren nach Anspruch 4, **dadurch gekennzeichnet, daß** der Signalpegel PDTCH_RXLEV auf die Weise in dem Paketfunknetz bestimmt wird, die mit dem Basisstationsenergiesteuerungsmodus anwendbar ist, der zu dieser Zeit implementiert ist.

6. Verfahren nach einem der vorhergehenden Ansprüche 4 oder 5, **dadurch gekennzeichnet, daß** der Differenzwert Z als ein relativer Wert hinsichtlich des Signalpegels PDTCH_RXLEV bestimmt wird.

7. Verfahren nach einem der vorhergehenden Ansprüche 3 bis 6, **dadurch gekennzeichnet, daß** der Signalpegel RXLEV mit dem Pegel des Hintergrundrauschens verglichen wird, der aus den Störsignalmessungen erhalten wird, die von der Mobilstation ausgeführt werden, wobei der/die Burst/Bursts als Rauschen ausgelegt wird/werden, wenn der Signalpegel RXLEV im wesentlichen dem Pegel des Hintergrundrauschens entspricht.

8. Verfahren nach einem der vorhergehenden Ansprüche, **dadurch gekennzeichnet, daß** das gemittelte Signal-Rausch-Verhältnis SNR eines Bursts/von Bursts, der/die im Anfangsteil der Blockperiode positioniert ist/sind, überwacht wird und ein Mindestwert für dieses Signal-Rausch-Verhältnis SNR eingestellt wird, wobei ein Burst/ Bursts unter dem Mindestwert als Rauschen ausgelegt wird/werden.

9. Verfahren nach einem der vorhergehenden Ansprüche, **dadurch gekennzeichnet, daß** das Paketfunknetz das GPRS-Netz und der Paketverkehrskanal der PDTCH-Kanal des GPRS-Netzes ist.

10. Verfahren nach einem der vorhergehenden Ansprüche 1 bis 8, **dadurch gekennzeichnet, daß** das Paketfunknetz ein UMTS-Netz ist.

11. Mobilstation, die zum Betrieb in einem Paketfunknetz angeordnet ist, wobei in dem Paketfunknetz Information in Datenfeldformat auf einem logischen Paketdatenverkehrskanal über eine Basisstation an die Mobilstation übertragen wird, wobei die Basisstation zur Reduzierung der Belastung des Funkkanals den Discontinuous-Transmission-Modus auf dem Paketverkehrskanal zur Downlink-Datenübertragung benutzt, wobei die Mobilstation Mittel (34) zum Überwachen der Eigenschaften von zumindest einem Burst b1, der im Anfangsteil jeder Blockperiode des Paketverkehrskanals positioniert ist, und Mittel (34) zum Einstellen der Mobilstation auf einen Energiesparmodus für den Rest der betreffenden Blockperiode umfaßt, wenn erkannt ist, daß der/die Burst/Bursts Rauschen anstelle einer Downlink-Übertragung enthält/enthalten, und die Mobilstation dazu angeordnet ist, nicht in den Energiesparmodus umzuschalten, wenn der Signalpegel von Blöcken, die zur Annahme akzeptiert sind, im folgenden als PDTCH_RXLEV markiert, unter einen bestimmten, vorgegebenen Schwellenwert fällt.

12. Mobilstation nach Anspruch 11, **dadurch gekennzeichnet, daß** die Mobilstation Mittel (34) zum Überwachen der Eigenschaften der ersten 1 bis 3 Bursts b1, b2, b3 der Blockperiode umfaßt.

13. Mobilstation nach einem der Ansprüche 11 oder 12, **dadurch gekennzeichnet, daß** die Mobilstation Mittel (34) zum Überwachen des gemittelten, empfangenen Signalpegels des/der Bursts, der/die im Anfangsteil der Blockperiode positioniert ist/sind, im folgenden als RXLEV markiert, umfaßt und für diesen Signalpegel RXLEV ein Mindestschwellenwert Y eingestellt ist, wobei die Mobilstation ein Burst/Bursts unter dem Mindestwert Y als Rauschen auslegt.

14. Mobilstation nach Anspruch 13, **dadurch gekennzeichnet, daß** die Mobilstation ferner Mittel (34) zum Vergleichen des Signalpegels RXLEV mit einem aktualisierten, gemittelten, empfangenen Signalpegel PDTCH_RXLEV umfaßt, der für Blöcke definiert ist, die zum Empfang akzeptiert wurden, so daß ein größter gestatteter Differenzwert Z für RXLEV nach unten bezüglich des PDTCH_RXLEV definiert ist, wobei die Mobilstation den/die Burst/Bursts als Rauschen auslegt, wenn der Signalpegel RXLEV um mehr als den Betrag des Differenzwerts Z von dem Signalpegel PDTCH_RXLEV abweicht.

15. Mobilstation nach Anspruch 14, **dadurch gekennzeichnet, daß** die Mobilstation Mittel (34) zum Definieren des Signalpegels PDTCH_RXLEV in dem Paketfunknetz auf eine Weise umfaßt, die mit dem Basisstationsenergiesteuerungsmodus anwendbar ist, der zu dieser Zeit implementiert ist.

16. Mobilstation nach einem der vorhergehenden Ansprüche 14 oder 15, **dadurch gekennzeichnet, daß** die Mobilstation Mittel (34) zum Definieren des Differenzwerts Z als einen relativen Wert hinsichtlich des Signalpegels PDTCH_RXLEV umfaßt.

17. Mobilstation nach einem der vorhergehenden Ansprüche 13 bis 16, **dadurch gekennzeichnet, daß** die Mobilstation Mittel (34) zum Vergleichen des Signalpegels RXLEV mit dem Pegel des Hintergrundrauschens umfaßt, der aus den Störsignalmessungen erhalten ist, die von der Mobilstation ausgeführt sind, wobei der/die Burst/Bursts als Rauschen ausgelegt wird/werden, wenn der Signalpegel RXLEV im wesentlichen dem Pegel des Hintergrundrauschens entspricht.

18. Mobilstation nach einem der vorhergehenden Ansprüche 11 bis 17, **dadurch gekennzeichnet, daß** die Mobilstation Mittel (34) zum Überwachen des gemittelten Signal-Rausch-Verhältnisses SNR eines Bursts/von Bursts, der/die im Anfangsteil der Blockperiode positioniert ist/sind, umfaßt und ein Mindestwert für dieses Signal-Rausch-Verhältnis SNR eingestellt wird, wobei die Mobilstation den/die Burst/Bursts unter dem Mindestwert als Rauschen auslegt.

19. Mobilstation nach einem der vorhergehenden Ansprüche 11 bis 18, **dadurch gekennzeichnet, daß** die Mobilstation zum Betrieb in einem GPRS-Netz angeordnet ist.

20. Mobilstation nach einem der vorhergehenden Ansprüche 11 bis 19, **dadurch gekennzeichnet, daß** die Mobilstation zum Betrieb in einem UMTS-Netz angeordnet ist.

**Revendications**

1. Procédé pour réduire la consommation d'énergie dans une station mobile opérant dans un réseau radio sous forme de paquet, dans lequel les informations sont transmises à travers une station de base à la station mobile en un format de trame de données sur un canal de trafic de données de paquet logique, dans lequel la station de base utilise afin de réduire la charge du canal radio, un mode de transmission discontinu dans ledit canal de trafic de paquet pour la transmission de données de liaison descendante, dans lequel les propriétés d'au moins une rafale positionnée dans la partie initiale de chaque période de bloc du canal de trafic de paquet est observée dans la station mobile et sur détection de ladite rafale/lesdites rafales contiennent des bruits au lieu d'une transmission de liaison descendante, la station mobile est établie en mode économie d'énergie pour le reste de la période de bloc en question, lorsque les niveaux de signal de bloc acceptés pour réception qui dans ce qui suit seront marqués comme PDTCH_RXLEV passent en dessous d'une certaine limite de seuil prédéfinie, la station mobile est empêchée de commuter en mode économie d'énergie.

2. Procédé selon la revendication 1, **caractérisé en ce que** les propriétés des 1 à 3 rafales (b1, b2, b3) de la période de bloc sont observées.

3. Procédé selon la revendication 1 ou 2, **caractérisé en ce que** le niveau du signal reçu moyen de ladite rafale/lesdites rafales positionnées dans la partie initiale de la période de bloc qui dans ce qui suit sera marquée comme RXLEV est commandée et pour ce niveau de signal RXLEV, une valeur de seuil minimale Y est établie, la rafale/les rafales en dessous de ladite valeur minimum Y étant interprétées comme bruit.

4. Procédé selon la revendication 3, **caractérisé en ce que** ledit niveau du signal RXLEV est de plus comparé au niveau du signal reçu mis en moyenne mis à jour PDTCH_RXLEV défini pour les blocs qui ont été acceptés pour réception, de manière telle qu'une valeur de différence Z la plus grande autorisée est définie pour RXLEV en aval par rapport à ladite valeur PDTCH_RXLEV dans lequel lorsque le niveau du signal RXLEV diffère du niveau de signal PDTCH_RXLEV plus que la quantité de ladite valeur de différence Z, ladite rafale/lesdites rafales sont interprétées comme bruit.

5. Procédé selon la revendication 4, **caractérisé en ce que** ledit niveau de signal PDTCH_RXLEV est déterminé dans le réseau radio sous forme de paquet de manière applicable au mode de commande de puissance de la station de base implémenté à ce moment.

6. Procédé selon l'une quelconque des revendications 4 ou 5 précédentes, **caractérisé en ce que** ladite valeur de différence Z est déterminée comme une valeur relative au vu du niveau de signal PDTCH_RXLEV.

7. Procédé selon l'une quelconque des revendications précédentes 3 à 6, **caractérisé en ce que** ledit niveau du signal RXLEV est comparé au niveau du bruit de fond obtenu à partir de mesures d'interférence effectuées dans la station mobile, dans lequel lorsque le niveau de signal RXLEV correspond sensiblement au niveau du bruit de fond, ladite rafale/lesdites rafales sont interprétées comme bruit.

**8.** Procédé selon l'une quelconque des revendications précédentes, **caractérisé en ce que** le rapport signal/bruit moyen SNR de la rafale/des rafales positionnées dans 1a partie initiale de la période de bloc est observé, et une valeur minimale est établie pour ce rapport signal/bruit SNR, la rafale/les rafales en dessous de ladite valeur minimale étant interprétées comme bruit.

**9.** Procédé selon l'une quelconque des revendications précédentes, **caractérisé en ce que** ledit réseau radio sous forme de paquet est le réseau GPRS et ledit canal de trafic de paquet est le canal PDTCH du réseau GPRS.

**10.** Procédé selon l'une quelconque des revendications précédentes 1 à 8, **caractérisé en ce que** le réseau radio sous forme de paquet est un réseau UMTS.

**11.** Station mobile conçue pour opérer dans un réseau radio sous forme de paquet, dans lequel réseau radio sous forme de paquet, les informations sont transmises à travers une station de base à la station mobile en un format de trame de données sur un canal de trafic de paquet logique, dans laquelle la station de base utilise, afin de réduire la charge du canal radio, dans ledit canal de trafic de paquet, le mode de transmission discontinu pour la transmission de données de liaison descendante, dans laquelle la station mobile comprend un moyen (34) pour observer les propriétés d'au moins une rafale b1 positionnée dans la partie initiale de chaque période de bloc du canal de trafic de données de paquet, et un moyen (34) pour établir la station mobile en mode économie d'énergie pour le reste de la période de bloc en question lors de la détection de ladite rafale/desdites rafales contient du bruit au lieu de la transmission de liaison descendante, la station mobile est conçue pour ne pas commuter en mode économie d'énergie lorsque le niveau du signal des blocs acceptés pour la réception qui dans ce qui suit sera marqué PDTCH_RXLEV, passe en dessous d'une certaine valeur de seuil prédéfinie.

**12.** Station mobile selon la revendication 11, **caractérisée en ce que** la station mobile comprend un moyen (34) pour observer les propriétés des première à troisième rafales (b1, b2, b3) de la période de bloc.

**13.** Station mobile selon la revendication 11 ou 12, **caractérisée en ce que** la station mobile comprend un moyen (34) pour observer le niveau du signal reçu moyen de ladite rafale/desdites rafales positionnées dans la partie initiale de la période de bloc qui dans ce qui suit sera marqué comme RXLEV, une valeur de seuil minimale Y étant établie pour ledit niveau de signal RXLEV, la station mobile interprétant la rafale/les rafales en dessous de ladite valeur minimale Y comme bruit.

**14.** Station mobile selon la revendication 13, **caractérisée en ce que** la station mobile comprend, en outre, un moyen (34) pour comparer ledit niveau de signal RXLEV à un niveau de signal reçu moyen mis à jour PDTCH_RXLEV défini pour les blocs qui ont été acceptés pour la réception, d'une manière telle qu'une valeur de différence Z autorisée la plus grande est définie pour RXLEV en aval par rapport à ladite valeur PDTCH_RXLEV, dans laquelle lorsque le niveau de signal RXLEV diffère du niveau de signal PDTCH_RXLEV de plus que la quantité de ladite valeur de différence Z, la station mobile interprète ladite rafale/lesdites rafales comme bruit.

**15.** Station mobile selon la revendication 14, **caractérisée en ce que** la station mobile comprend un moyen (34) pour définir ledit niveau de signal PDTCH_RXLEV dans le réseau sous forme de paquet d'une manière applicable au mode de commande de puissance de la station de base implémenté à ce moment.

**16.** Station mobile selon l'une quelconque des revendications précédentes 14 ou 15, **caractérisée en ce que** la station mobile comprend un moyen (34) pour définir ladite valeur de différence Z comme une valeur relative au vu du niveau de signal PTDCH_RXLEV.

**17.** Station mobile selon l'une quelconque des revendications 13 à 16 précédentes, **caractérisée en ce que** la station mobile comprend un moyen (34) pour comparer ledit niveau signal RXLEV au niveau du bruit de fond obtenu à partir des mesures d'interférence effectuées par la station mobile, dans laquelle lorsque le niveau du signal RXLEV correspond sensiblement au niveau dudit bruit de fond, ladite rafale/lesdites rafales sont interprétées comme bruit.

**18.** Station mobile selon l'une quelconque des revendications 11 à 17 précédentes, **caractérisée en ce que** la station mobile comprend un moyen (34) pour observer le rapport signal/bruit moyen SNR de la rafale/des rafales positionnées dans la partie initiale de la période de bloc, une valeur de seuil minimale étant établie pour ledit rapport signal/bruit SNR, la station mobile interprétant la rafale/les rafales en dessous de ladite valeur minimale comme bruit.

**19.** Station mobile selon l'une quelconque des revendications 11 à 18 précédentes, **caractérisée en ce que** la station mobile est conçue pour opérer dans un réseau GPRS.

20. Station mobile selon l'une quelconque des revendications 11 à 19, **caractérisée en ce que** la station mobile est conçue pour opérer dans un réseau UMTS.

Fig. 1

MULTIFRAME = 52 TDMA FRAMES

IDLE FRAME

BLOCK

TDMA FRAME

BURST, TIMESLOT

Fig. 2

EP 1 294 206 B1